# EUROPEAN PATENT SPECIFICATION

(11) **EP 0 456 478 B1**
(45) Date of publication and mention of the grant of the patent: **04.09.1996**
(21) Application number: 91304133.1
(22) Date of filing: 08.05.1991
(51) Int. Cl.: H04N 1/32

(54) **Image communication apparatus**
Bildübertragungsgerät
Appareil de transmission d'images

(30) Priority: 10.05.1990 JP 118668/90
(43) Date of publication of application: 13.11.1991
(73) Proprietor: CANON KABUSHIKI KAISHA, Tokyo (JP)
(72) Inventor: Yoshida, Takehiro, Shimomaruko, Ohta-ku, Tokyo (JP)
(74) Representative: Beresford, Keith Denis Lewis

(56) References cited:
- DE-A- 3 014 660
- US-A- 4 670 791
- PATENT ABSTRACTS OF JAPAN vol. 15, no. 152 (E-1057)17 April 1991 & JP-A-03027663
- PATENT ABSTRACTS OF JAPAN vol. 12, no. 348 (E-659)19 September 1988 & JP-A-63 104 575
- PATENT ABSTRACTS OF JAPAN vol. 6, no. 251 (E-147)10 December 1982 &JP-A-57 148 459

## Description

### BACKGROUND OF THE INVENTION

### Field of the Invention

The present invention relates to an image communication apparatus, and more particularly to an image communication apparatus which reads image data of a document sheet to be transmitted before the line connection, stores it in an image memory and sends the image data of the document sheet stored in the image memory to a designated destination.

### Related Background Art

A facsimile device which reads an image of a document sheet, stores it in an image memory and sends the image data of the document sheet stored in the image memory has been known. Patents relating to such a facsimile device are US-A- 4,811,385; US-A- 4,772,955; US-A- 4,845,569 and US-A- 4,827,349.

A facsimile device in which the number of sheets of document is entered by keys when the document sheets are read for transmission, and the number of sheets actually sent is compared with the entered number of sheets of document, and if the number of sheets of document actually sent is different from the entered number of document sheets, an alarm is generated, has also been known. A patent application relating to such a facsimile device is Japanese Laid-Open Patent Application JP-A- 57148459 (laid open on September 13, 1982). However, in such a facsimile device with the check function of the number of sheets, the number of sheets is checked when the document sheets are sent while they are read (direct transmission) and the number of sheets is not checked in the memory transmission. In the memory transmission, the document sheet is read into the memory before the line connection. Accordingly, the work by the user is rapid and the check of the number of document sheets to be transmitted can be more effectively done by the user by checking them while the document sheets are read.

However, in the memory transmission, many users return to their seats without checking the read condition and the missing of the pages can be first detected when the user checks an output report at the end of communication. In this case, the user may be obliged to confirm to the destination station by phone.

U.S. Patent Specification US-A-4670791 discloses a facsimile method in which a special document is required to distinguish between two sets of documents intended for different destinations and detection of this document triggers a count which is used after the documents have been sent to raise an alarm if an incorrect number of documents has been sent.

In the light of the above, it is a concern of the present invention to improve an image communication apparatus.

An embodiment of the present invention provides an image communication apparatus having a memory transmission function, which checks the number of pages of image data stored in a memory when the image data is stored into the memory.

In accordance with a first aspect of the invention there is provided image transmission apparatus as set out in claim 1.

In accordance with a second aspect of the invention there is provided a method of transmitting an image as set out in claim 4.

The present invention will be more readily understood from the following description of exemplary embodiments given with reference to the accompanying drawings, in which:
Fig. 1 shows a block diagram of a facsimile device in one embodiment of the present invention, and
Figs. 2A to 2C show flow charts of a control operation of a control circuit in the embodiment. One embodiment of the present invention is now explained in detail with reference to the drawings.

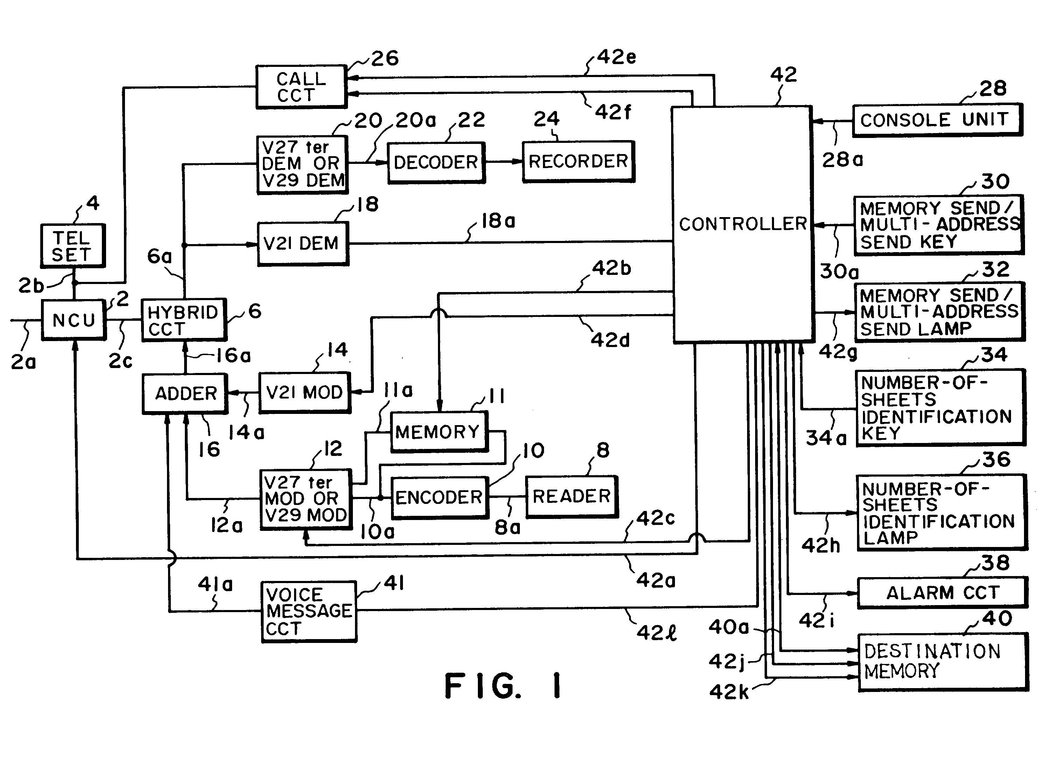

Fig. 1 shows a block diagram of a facsimile device of the present embodiment. In Fig. 1, numeral 2 denotes a network control unit (NCU) which is connected to a terminal of a line in order to use a telephone network for data communication to control the connection of the telephone switch network, switch the line to a data communication line or hold a loop. Numeral 2a denotes a telephone line.

The NCU 2 receives a signal on a signal line 42a. When a signal level thereof is "0", it connects the telephone line to a telephone set, that is, it connects the signal line 2a to a signal line 2b. If the signal level of the signal on the signal line 42a is "1", it connects the telephone line to the facsimile device, that is, it connects the signal line 2a to a signal line 2c. In a normal state, the telephone line is connected to the telephone set.

Numeral 6 denotes a hybrid circuit which isolates a transmitting signal from a received signal. The transmitting signal on a signal line 16a goes through the signal line 2c and the NCU 2 and is sent out to the telephone line. A signal sent from a sending station goes through the NCU 2 and the signal line 2c and is sent to a signal line 6a.

Numeral 8 denotes a reader which sequentially reads one scan line of image signal from the transmitting document sheet to generate signal trains representing black and white binary values. It may comprise an imaging device such as a charge coupled device (CCD) and an optical system. The black and white binary signal trains are supplied to a signal line 8a.

A numeral 10 denotes an encoder which receives data on the signal line 8a and produces MH (modified Huffman) encoded or MR (modified READ) encoded data on a signal line 10a.

Numeral 11 denotes a memory for storing the encoded data supplied to the signal line 10d. The signal stored in the memory 11 is supplied to a signal line 11a. The reading and writing from and to the memory 11 is controlled by a pointer on a signal line 42b.

A numeral 12 denotes a modulator which modulates in accordance with the CCITT Recommendation V27 ter (differential phase modulation) or V29 (quadrature modulation). When the signal level of a signal on a signal line 42c is "0", the modulator 12 receives the signal on the signal line 10a for modulation, and when the signal level of the signal on the signal line 42c is "1", the modulator 12 receives the signal on the signal line 11a, and supplies the modulated data to the signal line 12a.

Numeral 14 denotes a modulator which modulates in accordance with the CCITT Recommendation V21. The modulator 14 receives a protocol signal on a signal line 42d for modulation and supplies the modulated data to a signal line 14a.

Numeral 16 denotes an adder which receives signals on the signal lines 12a, 14a and 41a and supplies a sum signal to a signal line 16a.

Numeral 18 denotes a demodulator which demodulates in accordance with the CCITT Recommendation V21. The demodulator 18 receives a signal on a signal line 6a for V21 demodulation and supplies the demodulated data to a signal line 18a.

Numeral 20 denotes a demodulator which demodulates in accordance with the CCITT Recommendation V27 ter (differential phase modulation) or V29 (quadrature modulation). The demodulator 20 receives the signal on the signal line 6a for demodulation and supplies the demodulated data to a signal line 20a.

Numeral 22 denotes a decoder which receives the demodulated data on the signal line 20a, and supplies MH (modified Huffman) decoded or MR (modified READ) decoded data to a signal line 22a.

Numeral 24 denotes a recorder which receives the decoded data on the signal line 22a and record it sequentially line by line.

Numeral 26 denotes a calling circuit. When a call command pulse is issued to a signal line 42f, the calling circuit 26 receives the information on a signal line 42e and supplies a selection signal to a signal line 2b.

Numeral 28 denotes a console unit which comprises known keys such as ten-key, one-touch keys, start key, alphabet keys, and "*" and "#" keys. When the keys are depressed, the information is outputted to a signal line 28a.

Numeral 30 denotes a memory transmission/multi-address transmission key. When the key 30 is depressed, a pulse is generated on a signal line 30a.

Numeral 32 denotes a memory transmission/multi-address transmission lamp. When the signal level of a signal on a signal line 42g is "0", the lamp 32 is extinguished, and when the signal level is "1", the lamp is lit.

Numeral 34 denotes a read count check (or number-of-sheets identification) key. When the key 34 is depressed, a pulse is generated on a signal line 34a.

Numeral 36 denotes a read count check (or number-of-sheets identification) lamp. When the signal level of a signal on a signal line 42h is "0", the lamp 36 is extinguished, and when the signal level is "1", the lamp 36 is lit.

Numeral 38 denotes a count alarm generator. When the signal level of a signal on a signal line 42i is "0", no alarm is generated, and when the signal level is "1", an alarm is generated.

Numeral 40 denotes a memory for storing a destination to be called when the preset number of sheets and the number of sheets actually read are not equal. When a telephone number is to be stored in the destination memory 40, the telephone number is supplied to a signal line 40a and a write pulse is generated on a signal line 42j. When the telephone number stored in the destination memory 40 is to be read, a read pulse is generated on a signal line 42k so that the stored telephone number is read out to the signal line 40a.

Numeral 41 denotes a voice circuit which generates voice of "The number of sheets read is not equal" to a signal line 41a when a pulse is generated on a signal line 42ℓ.

Numeral 42 denotes a control circuit which may comprise a microprocessor to control the respective units to control the transmission in the following manner.

An operation of an operator to check the number of sheets read in the present embodiment is now explained.

The direct transmission, that is, the operation in which the reading and the transmission of the image are carried out while the line is connected is first explained.

In this transmission mode, the user depress the read count check key 34 to light the read count check lamp 36 to activate the function of the present embodiment.

The user enters the number of sheets to be read or the number of sheets to be transmitted through the ten-key of the console unit 28. The user then depresses the start key to complete the entry of the number of sheets to be read or the number of sheets to be transmitted.

The user then calls through the ten-key, one-touch key or preset key (or abbreviation key) of the console unit 28.

During the transmission, the control circuit 42 counts the number of sheets actually transmitted. At the end of the transmission, the preset number of sheets to be read and the number of sheets actually transmitted are compared. If they are not equal, the sheet count alarm 38 is activated. If the numbers are equal, the process is terminated in a normal state.

The control for the memory transmission or the multi-address transmission in which the transmitting document image is stored into the memory is now explained.

The memory transmission/multi-address transmission key 30 is depressed to light the memory transmission/multi-address transmission lamp 32 and select the memory transmission/multi-address transmission mode.

Then, the read count check key 34 is depressed to light the read count check lamp 36 to activate the function of the present invention.

The number of sheets to be read is entered through the ten-key of the console unit 28. Then, the start key is depressed to complete the entry of the number of sheets to be read.

The destination station is designated by the one-touch dialing key, preset dialing key or ten-key of the console unit 28.

When a plurality of destination stations are entered, the multi-address transmission mode is selected. When one destination station is selected, the memory transmission mode is selected. The designation of the destination by the ten-key should be only one station and the final destination. When the start key is depressed or if no key is depressed for more than 5 seconds, a document storage process is started.

In the document storage process, the document image read by the reader 8 is stored into the memory 11. The number of pages stored into the memory 11 is counted.

After all document sheets have been stored, the preset number of sheets to be read and the number of sheets actually stored are compared. If the numbers are not equal, the count alarm is activated and the calling operation is not started.

The information stored in the memory 11 is assigned with a communication number and it can be erased from the memory 11 or read from the memory 11. The information stored in the memory 11 can also be transmitted by designating the communication number.

On the other hand, if the number of sheets stored and the number of sheets to be read are equal, the designated destination is called for the memory transmission, or the designated destinations are sequentially called for the multi-address transmission.

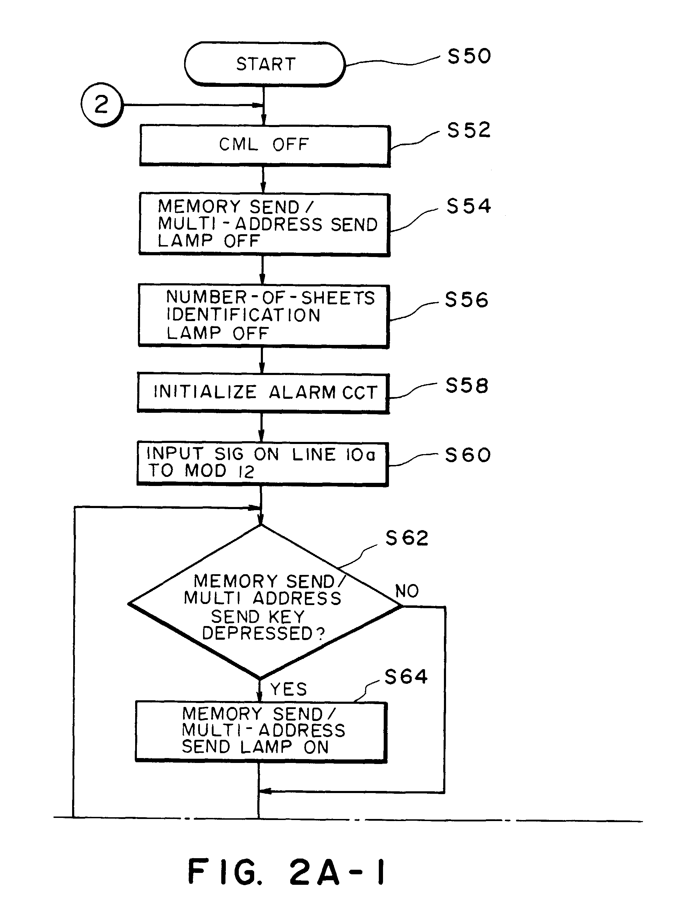

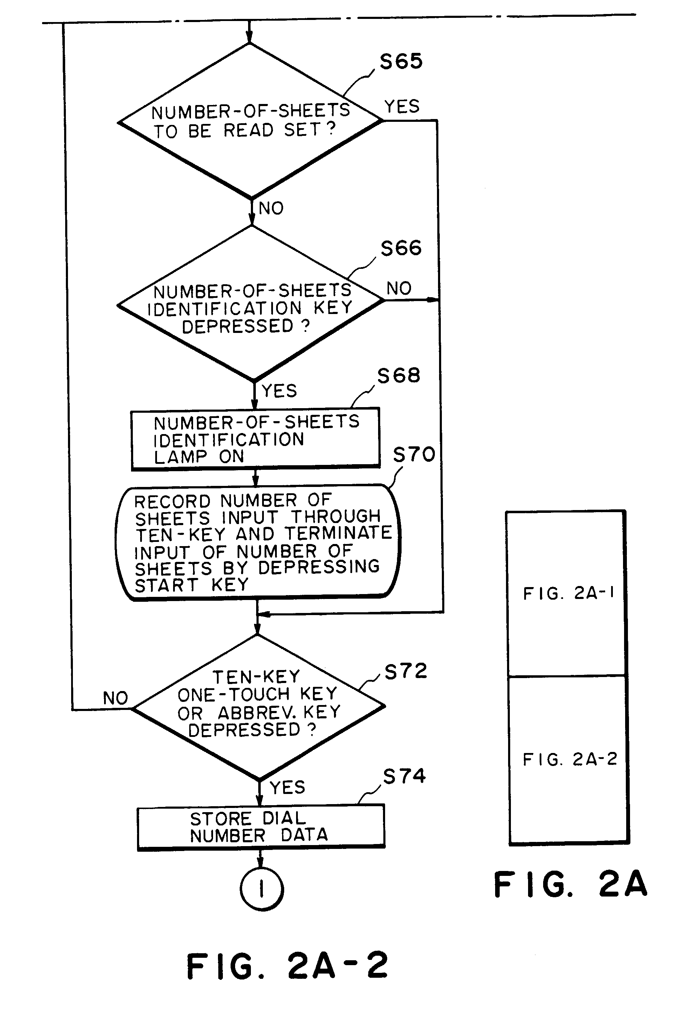

The operation of the apparatus of Fig. 1 is now explained with reference to Figs. 2A to 2C. Figs. 2A to 2C show a flow of control in the control circuit 42. The control sequence shown is stored in a ROM in the control circuit 42 as a control program for the control circuit 42.

In Fig. 2A, a step S50 indicates start. In a step S52, a signal having the signal level "0" is supplied to the signal line 42a to deactivate a CML relay of the NCU 2, that is, to connect the telephone line 2a to the telephone set 4.

In a step S54, a signal having the signal level "0" is supplied to the signal line 42g to extinguish the memory transmission/multi-address transmission lamp.

In a step S56, a signal having the signal level "0" is supplied to the signal line 42h to extinguish the read count check lamp.

In a step S58, a signal having the signal level "0" is supplied to the signal line 42i to initialize the count alarm generator 38.

In a step S60, a signal having the signal level "0" is supplied to the signal line 42c so that the modulator 12 receives the signal on the signal line 10a.

The initialization is carried out in the steps S52 to S60.

In a step S62, the signal on the signal line 30a is read to determine whether the memory transmission/multi-address transmission key has been depressed or not. If the key has been depressed, the process proceeds to a step S64, and if the key has not been depressed, the process proceeds to a step S65.

In the step S64, a signal having the signal level "1" is supplied to the signal line 42g to light the memory transmission/multi-address lamp.

In the step S65, whether the number of sheets to be read has been set or not is determined. If it has been set, the process proceeds to a step S72, and if it has not been set, the process proceeds to a step S66.

In the step S66, the signal on the signal line 34a is read to determine whether the count check key has been depressed or not. If it has been depressed, the process proceeds to a step S68, and if it has not been depressed, the process proceeds to a step S72.

In the step S68, a signal having the signal level "1" is supplied to the signal line 42h to light the read count check lamp.

In the step S70, the read count entered through the ten-key is stored. Then, the start key is depressed to terminate the entry of the read count.

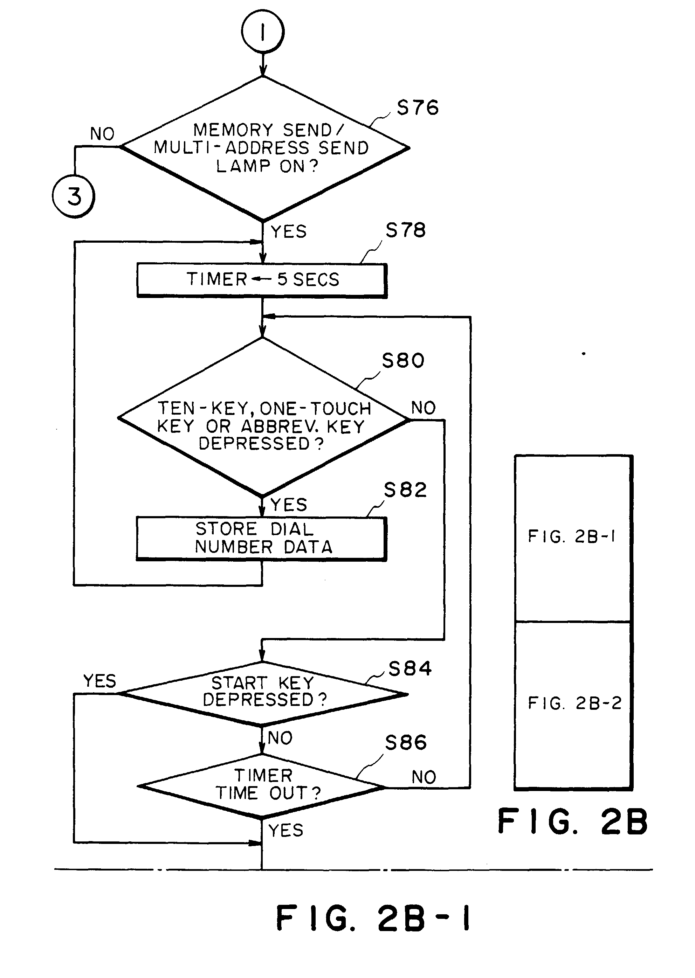

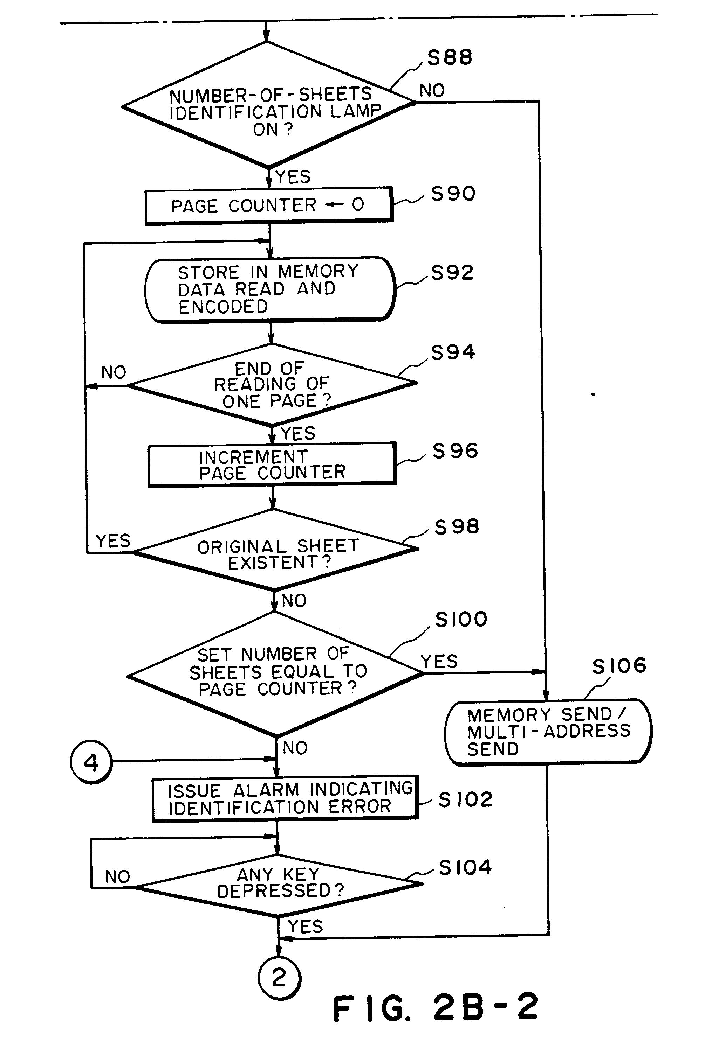

In a step S72, the signal on the signal line 28a is examined to determine if the ten-key, the one-touch key or the preset key has been depressed or not. If it has not been depressed, the process proceeds to the step S62 to store the telephone number information of the depressed key (step S74). Then, the process proceeds from the step S74 to a step S76 of Fig. 2B.

In the step S76 of Fig. 2B, whether the memory transmission/multi-address lamp is lit or not, that is, whether the memory transmission mode is set or not is determined. If the memory transmission mode is set, that is, if the memory transmission/multi-address lamp is lit, the process proceeds to a step S78. If the memory transmission mode is not selected but the direct transmission mode is selected, that is, if the memory transmission/multi-address lamp is lit, the process proceeds to a step S108.

In the step S78, the timer is set to 5 seconds.

In a step S80, the signal on the signal line 28a is examined to determine whether the ten-key, the one-touch key or the preset key has been depressed or not. If it has not been depressed, the process proceeds to a step S84, and if it has been depressed, the depressed telephone numbers are sequentially stored (step S82). This is the multi-address transmission mode.

In the step S84, the signal on the signal line 28a is examined to determine whether the start key has been depressed or not. If the start key has been depressed, the process proceeds to a step S88, and if it has not been depressed, the process proceeds to a step S86.

In the step S86, whether the timer set to 5 seconds in the step S78 has timed out or not is determined. If it has not timed out, the process proceeds to a step S80, and if it has timed out, the process proceeds to a step S88.

In the step S88, whether the read count check lamp is lit or not, that is, whether the read count is to be checked or not is determined. If it is to be checked, that is, if the read count lamp is lit, the process proceeds to a step S90. If the read count is not to be checked, that is, if the read count lamp is not lit, the process proceeds to a step S106.

In the step S90, the page counter which counts the number of sheets actually read is reset to "0".

In a step S92, the data is read and encoded, and the encoded data is stored into the memory.

In a step S94, whether one-page reading has been completed or not is determined. If it has been completed, the process proceeds to a step S96 to increment the page counter by one. If it has not been completed, the process proceeds to a step S92.

In a step S98, whether there is unread document sheet or not is determined, and if there is, the process proceeds to a step S92, and if there is not, the process proceeds to a step S100.

In the step S100, whether the read count set in the step S70 and the count of the page counter (the number of document sheets actually read) are equal or not is determined. If they are equal, the process proceeds to a step S106 to call the designated destination in the memory transmission mode or the multi-address transmission mode. If they are not equal, the process proceeds to a step S102.

In the step S102, a signal having the signal level "1" is sent to the signal line 42i to generate the count check alarm. the alarm is stopped when any key is depressed in the step S104, that is, when the operator notices the alarm.

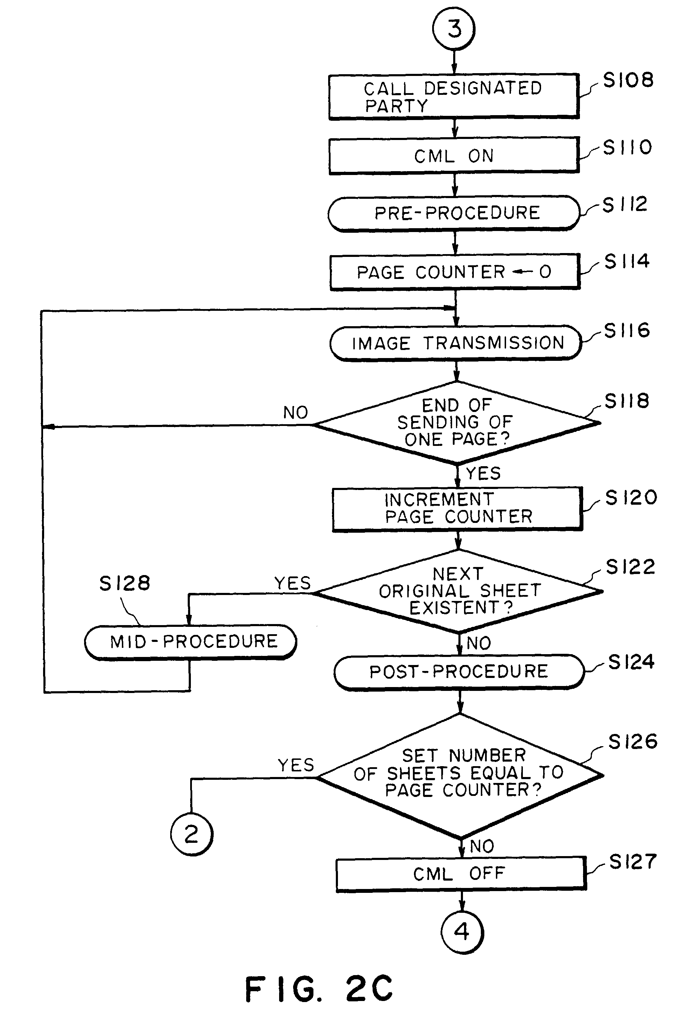

In a step S108 of Fig. 2C, the telephone number of the designated destination is sent out to the signal line 42e, and a call command pulse is generated on the signal line 42f to call the destination station.

In a step S110, a signal having the signal level "1" is sent to the signal line 42a to activate the CML relay in order to connect the line 2a to the facsimile device.

In a step S112, a pre-procedure is executed.

In a step S114, the page counter which counts the number of sheets actually transmitted is reset to "0".

In a step S116, the image transmission is executed.

In a step S118, whether one-page transmission has been completed or not is determined. If it has been completed, the process proceeds to a step S120 to increment the page counter by one. If it has not been completed, the process proceeds to a step S116.

In a step S122, whether there exist a next document sheet or not is determined. If it exists, the process proceeds to a step S128 to execute an intermediate procedure. If it does not exist, the process proceeds to a step S124 to execute a post-procedure.

In a step S126, whether the read count set in the step S70 and the count of the page counter (the number of sheets actually transmitted) are equal or not is determined. If they are equal, the process proceeds to the step S52. If they are not equal, a signal having the signal level "0" is sent to the signal line 42a in a step S127 to deactivate the CML relay of the NCU 2 in order to connect the line to the telephone set 4. Then, the process proceeds to a step S102.

In the present embodiment, when the count check mode has been selected and the number of document sheets which the user set and the number of document sheets stored in the memory 11 are not equal, the alarm is generated after the transmission in the direct transmission mode to inform it to the operator. In the memory transmission mode, if the counts are not equal when the read information has been stored in the memory, the alarm is generated and the calling is started.

In the present embodiment, since no call is made in the memory transmission mode if the counts are not equal, a risk of transmitting eroneous information to the destination is avoided.

The multi-address transmission may be considered as a kind of memory transmission, and the same control may be applied.

Where the counts of the document sheets are not equal, the designated destination may be called to inform it to the operator by audio means.

By doing so, in the memory transmission mode, the check function is activated at the end of reading, and if the input read count and the number of sheets actually read are not equal, it can be informed to the operator before calling.

Where the number of sheets which the user set in the read circuit 8 and the number of sheets actually read are not equal, the designated destination may be called and it may be informed to the operator of the destination by audio means after the operator hooked off the handset. For example, the message may be "The read count is not equal."

In order to implement it, the following control may be inserted between the steps S100 and S102 of Fig. 2B.

The destination to be called is read from the destination memory 40, the telephone number of the destination is sent to the signal line 42e, and a call pulse is generated on the signal line 42f to call the destination.

The CML relay of the NCU 2 is activated to connect the facsimile device to the line. After the confirmation of the response by the destination, a pulse is generated on the signal line 42ℓ to generate a sound message of "The read count is not equal" to the user.

Then, the CML relay of the NCU 2 is deactivated to connect the telephone line to the telephone set 4.

In the manner, the user may discuss with the operator of the destination about the retransmission through the manual control by the telephone set 4 or interrupt the transmission.

## Claims

1. An image transmission apparatus, comprising:
reading means (8) for successively reading documents supplied sequentially thereto by feeding means;
a memory (11) for storing image data of the document sheets read by said reading means;
transmitting means (2,6,12,16) for transmitting image data from said memory after the completion of reading of a plurality of document sheets;
manual entry means (28) for manually entering a number of document sheets; and
control means (42) for counting the number of document sheets of which images are stored in said memory, and characterised in that said control means are operative to compare the number of document sheets entered through said manual entry means and the number of sheets of which images are stored in said memory and for generating an alarm when the comparison result shows that both numbers are not equal prior to transmission of the stored image data.

2. Apparatus according to claim 1 wherein the transmission is prevented when the entered number of document sheets and the count are not equal.

3. Apparatus according to claim 2 further comprising call means, wherein said control means stops the calling.

4. A method for transmitting an image by reading (8) a plurality of document sheets, storing the image data generated by said reading in an image memory (11) and transmitting (2,6,12,16) the image data from said image memory after completion of reading of a plurality of document sheets, and characterised in that:
the number of document sheets to be read is entered manually;
the number of document sheets of which images are stored in said image memory is counted; and
the manually entered number of document sheets and the count of the number of sheets of the stored images is compared and an alarm is generated, when the comparison result shows that both numbers are not equal.

5. A method according to claim 4, wherein transmission is prevented when the set number and the count are different.

## Patentansprüche

1. Bildübertragungsgerät mit
einer Leseeinrichtung **(8)** zum aufeinanderfolgenden Lesen von nacheinander durch eine Zuführeinrichtung zugeleitete Dokumentenvorlagen,
einer Speichereinrichtung **(11)** zum Speichern der durch die Leseeinrichtung gelesenen Bilddaten der Dokumentenvorlagen,
einer Übertragungseinrichtung **(2, 6, 12, 16)** zum Übertragen von Bilddaten aus der Speichereinrichtung nach dem Abschließen des Lesens einer Vielzahl von Dokumentenvorlagen,
einer von Hand betätigten Eingabeeinrichtung **(28)** zum manuellen Eingeben einer Anzahl der Dokumentenvorlagen und
einer Steuereinrichtung **(42)** zum Zählen der Anzahl der Dokumentenvorlagen, welche als Bilder in der Speichereinrichtung abgelegt sind,
**dadurch gekennzeichnet, daß** die Steuereinrichtungen funktionswirksam sind, um die mit der manuellen Eingabeeinrichtung eingegebene Anzahl der
Dokumentenvorlagen und die Anzahl der Dokumentenvorlagen, welche als Bilder in der Speichereinrichtung abgelegt sind, zu vergleichen und zum Erzeugen eines Alarms, wenn das Ergebnis des Vergleichs vor dem Übertragen der gespeicherten Bilddaten zeigt, daß beide Zahlenwerte nicht übereinstimmend sind.

2. Gerät gemäß Anspruch 1, wobei das Übertragen verhindert wird, wenn die eingegebene Anzahl der Dokumentenvorlagen und die gezählte Anzahl nicht übereinstimmend sind.

3. Gerät gemäß Anspruch 2, welches ferner eine Anrufeinrichtung aufweist, wobei die Steuereinrichtung das Anrufen unterbindet.

4. Verfahren zum Übertragen eines Bildes durch das Lesen einer Vielzahl von Dokumentenvorlagen mit einer Leseeinrichtung **(8)**, das Ablegen der durch das Lesen mit der Leseeinrichtung **(8)** erzeugten Bilddaten in einem Bildspeicher einer Speichereinrichtung **(11)** und nach dem Abschließen des Lesens einer Vielzahl von Dokumentenvorlagen das Übertragen der Bilddaten aus dem Bildspeicher der Speichereinrichtung durch die Übertragungseinrichtung **(2, 6, 12, 16)**,
**dadurch gekennzeichnet, daß** die Anzahl der zu lesenden Dokumentenvorlagen von Hand eingegeben wird,
die Anzahl der Dokumentenvorlagen, von welchen Bilder in dem Bildspeicher der Speichereinrichtung abgelegt sind, gezählt wird, und
die von Hand eingegebene Anzahl der Dokumentenvorlagen und die gezählte Anzahl der Dokumentenvorlagen der gespeicherten Bilder miteinander verglichen werden und das Auslösen eines Alarms erfolgt, wenn das Ergebnis des Vergleichs zeigt, daß beide Zahlenwerte nicht übereinstimmend sind.

5. Verfahren gemäß Anspruch 4, wobei das Übertragen verhindert wird, wenn der durch Eingeben eingestellte Zahlenwert und die gezählte Anzahl verschieden sind.

## Revendications

1. Appareil de transmission d'image, comprenant:
un moyen de lecture (8) pour lire de manière successive des documents qui lui sont envoyés de manière séquentielle par des moyens d'alimentation;
une mémoire (11) pour stocker des données d'image des feuilles du document lues par ledit moyen de lecture;
des moyens de transmission (2, 6, 12, 16) pour transmettre des données d'image en provenance de ladite mémoire à la fin de la lecture d'une pluralité de feuilles de document;
un moyen (28) d'introduction manuelle pour introduire manuellement un certain nombre de feuilles de document; et
des moyens de commande (42) pour compter le nombre de feuilles de document dont des images sont stockées dans ladite mémoire, et caractérisé en ce que lesdits moyens de commande sont opérationnels pour comparer le nombre de feuilles de document introduites par l'intermédiaire dudit moyen d'introduction manuelle et le nombre de feuilles dont des images sont stockées dans ladite mémoire et pour générer une alarme lorsque le résultat de la comparaison montre que les deux nombres ne sont pas égaux, avant la transmisssion des données d'image stockées.

2. Appareil selon la revendication 1, dans lequel la transmission est empêchée lorsque le nombre introduit de feuilles de document et le compte ne sont pas égaux.

3. Appareil selon la revendication 2, comprenant en outre un moyen d'appel, dans lequel lesdits moyens de commande arrêtent l'appel.

4. Procédé de transmission d'une image par lecture (8) d'une pluralité de feuilles de document, stockage des données d'image générées par ladite lecture dans une mémoire (11) d'image et transmission (2, 6, 12, 16) des données d'image en provenance de ladite mémoire d'image à la fin de la lecture d'une pluralité de feuilles de document, et caractérisé en ce que:
le nombre de feuilles de document à lire est introduit manuellement;
le nombre de feuilles de document dont des images sont stockées dans ladite mémoire d'image est compté; et
le nombre de feuilles de document introduit manuellement et le compte du nombre de feuilles des images stockées sont comparés et une alarme est générée lorsque le résultat de la comparaison montre que les deux nombres ne sont pas égaux.

5. Procédé selon la revendication 4, dans lequel la transmission est empêchée lorsque le nombre établi et le compte sont différents.
